# EUROPÄISCHE PATENTANMELDUNG

(11) **EP 3 700 033 A1**
(43) Veröffentlichungstag der Anmeldung: **26.08.2020**
(21) Anmeldenummer: 20152794.2
(22) Anmeldetag: 21.01.2020
(51) Int. Cl.: H02G 3/04, E04H 12/22, B60L 53/30

(54) **LADESTATIONSMONTAGEADAPTER, SYSTEM MIT EINEM SOLCHEN ADAPTER UND VERFAHREN ZUR MONTAGE EINER LADESTATION**

(30) Priorität: 19.02.2019 DE 102019104107
(71) Anmelder: Innogy SE, 45128 Essen (DE)
(72) Erfinder: Helnerus, Stefan, 59821 Arnsberg (DE); Müller-Winterberg, Christian, 46282 Dorsten (DE)
(74) Vertreter: Cohausz & Florack

(57) **Zusammenfassung**

Ladestationsmontageadapter umfassend eine Basisplatte 18 mit einem ersten Lochmuster 20 und einer Anordnung von Montagehilfen 22, 26, dadurch gekennzeichnet, dass die Basisplatte 18 eine von zumindest dem ersten Lochmuster 20 und/oder den Montagehilfen 22, 26 eingefasste Ausnehmung 40 zur Durchführung eines elektrischen Kabels 34 aufweist

## Beschreibung

Der Gegenstand betrifft einen Ladestationsmontageadapter sowie ein System mit einem Ladestationsmontageadapter als auch ein Verfahren zur Montage einer Ladestation. Eine Ladestation kann dabei eine stationäre Einrichtung zum Laden von Fahrzeugen, insbesondere elektrisch betriebenen Fahrzeugen, insbesondere PKW, LKW, Zweirädern oder dergleichen sein.

Ladestationen, insbesondere solche, welche über ein eigenes Gehäuse und in dem Gehäuse verbauter Leistungselektronik verfügen, werden in der Regel stationär installiert. Solche Installationen sind sowohl bei stehenden Ladestationen als auch bei Ladestationen, die an einer Wand montiert sind notwendig. Gerade bei stehenden Ladestationen ist es notwendig, ein Bodenfundament vorzusehen, um die Ladestation mit einem sicheren Stand installieren zu können. Im Bereich der mechanischen Installationsanschlüsse, das heißt im Bereich des Bodenfundaments oder des Anschlusses an der Wand, ist in der Regel ein Anschlusskabel vorgesehen, welches in die Ladestation hineingeführt ist. Die Kabeleinführung ist dabei häufig innerhalb der äußeren Grenzen des Gehäuses, so dass im installierten Zustand das Kabel von dem Gehäuse verdeckt ist.

Nach einer erfolgreichen Installation einer Ladestation kann diese in Betrieb genommen werden. Die Anforderungen an Ladestationen nehmen jedoch mit der zunehmenden Verbreitung von Elektrofahrzeugen stets zu. Einige dieser Anforderungen lassen sich durch hardwaretechnische oder softwaretechnische Nachrüstungen an bestehenden Ladestationen erfüllen, andere erfordern jedoch einen kompletten Austausch der Ladestation. Die fortschreitende Entwicklung von Ladestationen führt dazu, dass diese neue Formfaktoren aufweisen und insbesondere in einer anderen Art und Weise zu montieren sind als bestehende Ladestationen. Dies ist insofern problematisch, als dass die Installationsinfrastruktur von Bestandsladestationen vorhanden ist, welche bevorzugt genutzt werden sollte. Bisher besteht keine Möglichkeit, bestehende Installationsinfrastruktur bei einem Austausch wieder zu verwenden.

Daher lag dem Gegenstand die Aufgabe zugrunde, den Austausch von Ladestationen unter Vermeidung von baulichen Maßnahmen zu ermöglichen.

Diese Aufgabe wird durch einen Ladestationsmontageadapter nach Anspruch 1, ein System nach Anspruch 9, sowie ein Verfahren nach Anspruch 12 gelöst.

Der gegenständliche Ladestationsmontageadapter ermöglicht es, eine neue Ladestation auf einem Fundament oder an einer bestehenden Installationsinfrastruktur anzubringen, obwohl der Formfaktor der neuen Ladestation verschieden zu dem Formfaktor der Bestandsladestation ist. Hierfür wird eine Basisplatte vorgeschlagen, mit einem ersten Lochmuster und einer Anordnung von Montagehilfen. Mit Hilfe des ersten Lochmusters und den Montagehilfen lässt sich die Basisplatte einerseits an einer bestehenden baulichen Anlage, insbesondere einem Bodenfundament befestigen und andererseits lässt sich eine neue Ladestation an der Basisplatte befestigen. Die Einführung des Versorgungskabels in das Innere der Ladestation wird dabei bevorzugt dadurch ermöglicht, dass die Basisplatte eine von zumindest dem ersten Lochmuster und/oder der Montagehilfe eingefasste Ausnehmung zur Durchführung eines elektrischen Kabels aufweist.

Das in die Bestandsladestation eingeführte elektrische Kabel zum Anschluss der Ladestation an das elektrische Versorgungsnetz wird von der Basisplatte, insbesondere deren Ausnehmung aufgenommen, so dass auch die elektrische Installation einer neuen Ladestation keine Neuverkabelung erfordert. Mit Hilfe des gegenständlichen Ladestationsmontageadapters ist es möglich, eine Bestandsladestation von der baulichen Installation, insbesondere dem Fundament oder der Wand abzumontieren, die Basisplatte mit Hilfe des ersten Lochmusters oder den Montagehilfen an den bestehenden Verbindungspunkten mit der baulichen Anlage zu verbinden und eine neue Ladestation über das erste Lochmuster oder die Montagehilfe mit der Basisplatte zu verbinden. Da erstes Lochmuster und Montagehilfe räumlich voneinander getrennt sind, ist es möglich, zwei verschiedene Formfaktoren von Ladestationen zu unterstützen. Somit lässt sich eine neue Ladestation auf einem Bestandsfundament installieren oder auch eine alte Ladestation auf einem Fundament, welches für eine neue Ladestation eingerichtet ist.

Um eine neue Ladestation plan auf der Basisplatte aufsetzen zu können oder um die Basisplatte plan auf die Unterlage (Wand oder Fundament) aufsetzen zu können, wird vorgeschlagen, dass die Löcher des ersten Lochmusters auf einer ersten Seite der Basisplatte jeweils eine Schraubenkopfsenkung aufweisen und die Montagehilfen in Richtung der ersten Seite weisen. Die Montagehilfen können als Anschlussbolzen oder Stifte vorgesehen sein. Die Anschlussbolzen können im Wesentlichen senkrecht von der Basisplatte auf der ersten Seite hervorstehen.

Es ist möglich, dass das erste Lochmuster einem Lochmuster einer Bestandsladestation entspricht und die Montagehilfen die Anschlussmimik einer neuen Ladestation aufweist. In einem solchen Fall kann die Bestandsladestation demontiert werden, die Basisplatte mit der ersten Seite nach oben weisend auf das Bestandsfundament aufgesetzt werden, die Basisplatte über die Löcher des ersten Lochmusters mit dem Fundament verbunden werden, wobei durch die Schraubenkopfsenkung trotz Verschraubung der Basisplatte mit der Unterlage eine plane Oberfläche auf der ersten Seite der Basisplatte gebildet ist. Anschließend kann eine neue Ladestation auf die Montagehilfen aufgesetzt werden und an den Montagehilfen befestigt werden.

Wenn in dieser Anmeldung die Befestigung der Basisplatte an einem Fundament beschrieben ist, so gilt die Beschreibung sinngemäß auch zur Befestigung der Basisplatte an vorhanden Löchern an einer Wand oder einer sonstigen Unterlage.

Gemäß einem Ausführungsbeispiel wird vorgeschlagen, dass die Montagehilfen aus der ersten Seite der Basisplatte im Wesentlichen senkrecht hervorstehende Anschlussbolzen sind. Die Anschlussbolzen verfügen insbesondere über ein Gewinde und können somit mittels einer Mutter verschraubt werden. Wird die Basisplatte auf ein Bestandsfundament aufgesetzt, so können die Montagehilfen auf der nach oben weisenden ersten Seite der Basisplatte aus der Basisplatte heraus ragen. Eine Anschlussmimik einer neuen Ladestation kann auf die Montagehilfen aufgesteckt werden und ein Verschrauben der Basisplatte mit der neuen Ladestation kann erfolgen.

Gemäß einem Ausführungsbeispiel wird vorgeschlagen, dass die Montagehilfen aus einem zweiten Lochmuster gebildet sind. Das bestehende erste Lochmuster kann an eine Anschlussmimik einer bestehenden Ladestation angepasst sein und die Lochabstände entsprechend gewählt sein und das zweite Lochmuster kann an die Anschlussmimik einer neuen Ladestation angepasst sein und die Lochabstände entsprechend gewählt sein.

Das erste und/oder zweite Lochmuster kann aus einem odermehreren voneinander beabstandeten Löchern, insbesondere Durchgangslöchern in der Basisplatte gebildet sein.

Zur Montage einer neuen Ladestation auf einem Bestandsfundament kann, wie oben bereits beschrieben, die Basisplatte auf das Bestandsfundament nach der Demontage einer Bestandsladestation aufgesetzt werden und beispielsweise über Schrauben und das erste Lochmuster mit dem Fundament verschraubt werden. Eine neue Ladestation kann auf die Basisplatte aufgesetzt werden und über das zweite Lochmuster mit der Basisplatte verschraubt werden. Auch ist es möglich, dass ausgehend von der zweiten Seite, die auf dem Fundament aufliegt, vor dem Verschrauben mit der Basisplatte mit dem Fundament, Schrauben oder Bolzen durch das zweite Lochmuster gesteckt werden, die dann nach dem Verschrauben der Basisplatte aus der ersten Seite nach oben in der Art von Anschlussbolzen hervorstehen. Dann kann eine neue Ladestation mit diesen Anschlussbolzen verschraubt werden.

In diesem Zusammenhang ist von besonderen Vorteil, wenn die Löcher des zweiten Lochmusters auf einer zweiten Seite der Basisplatte jeweils eine Schraubenkopfsenkung aufweisen. Dies ermöglicht es, beim Durchstecken von Schrauben/Bolzen auf der zweiten Seite diese Schrauben in die Schraubenkopfsenkung einzusetzen. Dann kann die Basisplatte plan ohne Spiel auf das Bestandsfundament aufgesetzt werden, wobei gleichzeitig Bolzen oder Schrauben durch das zweite Lochmuster der Montagehilfe durchgesteckt sein können.

Gemäß einem Ausführungsbeispiel wird vorgeschlagen, dass die Löcher des ersten und/oder zweiten Lochmusters Gewinde aufweisen. Wird eine neue Ladestation auf ein Bestandsfundament aufgesetzt, so kann ein Verschrauben der Basisplatte mit dem Bestandsfundament über die Löcher des ersten Lochmusters erfolgen. Eine neue Ladestation mit einer geänderten Anschlussmimik kann an dem zweiten Lochmuster ausgerichtet werden und über Löcher der Anschlussmimik kann die neue Ladestation mit den Löchern der Basisplatte des zweiten Lochmusters verschraubt werden. Dabei können Schrauben in das Gewinde des zweiten Lochmusters eingeschraubt werden. Auch bei einer Montage einer Bestandsladestation auf einem Fundament für eine neue Ladestation kann beispielsweise die Basisplatte auf das Fundament aufgesetzt werden und das zweite Lochmuster kann an den Bohrungen des Fundaments ausgerichtet werden. Anschließend kann die Basisplatte mit dem Fundament verschraubt werden. Daraufhin kann die zu installierende Ladestation an den Löchern des ersten Lochmusters ausgerichtet werden und mit den Löchern des ersten Lochmusters verschraubt werden, wobei insbesondere Schrauben in die Gewinde der Löcher des ersten Lochmusters eingeschraubt werden können.

Gemäß einem Ausführungsbeispiel wird vorgeschlagen, dass Anschlussbolzen von der zweiten Seite durch die Löcher des ersten Lochmusters oder die Löcher des zweiten Lochmusters geschoben sind. Für den Fall der Montage einer Bestandsladestation auf einer Basisplatte, können Anschlussbolzen durch das erste Lochmuster der Basisplatte durchgeschoben werden. Für den Fall der Montage einer neuen Ladestation auf einem Bestandsfundament können Anschlussbolzen durch die Löcher des zweiten Lochmusters durchgeschoben werden.

Ladestationen verschiedener Generationen können unterschiedliche Anschlussmimiken aufweisen. Das bedeutet, dass im Bereich des Bodens der jeweiligen Ladestation ein bestimmter Lochabstand vorgesehen ist, über den eine Verschraubung der Ladestation an einem Fundament erfolgen kann. Entsprechend der unterschiedlichen Anschlussmimiken (Lochabständen) der verschiedenen Ladestationen können auch die ersten und/oder zweiten Lochmuster und/oder die Montagehilfen angeordnet sein. Dabei wird insbesondere vorgeschlagen, dass das erste Lochmuster zur Befestigung einer ersten Ladestation angeordnet ist. Die erste Ladestation kann eine Anschlussmimik aufweisen, die korrespondiert zu dem Lochabstand der Löcher des ersten Lochmusters. Die Montagehilfen können zur Befestigung einer zweiten, von der ersten Ladestation verschiedenen Ladestation angeordnet sein. Diese Ladestation kann eine Anschlussmimik haben, deren Lochabstand korrespondiert zu dem Abstand der Montagehilfen, insbesondere zu dem Lochabstand des zweiten Lochmusters und/oder dem Abstand der Anschlussbolzen der Montagehilfen.

Ein weiterer Aspekt ist ein System mit einem zuvor beschriebenen Ladestationsmontageadapter. Ferner umfasst das System eine Unterlage. Die Unterlage kann dabei entweder ein Bodenfundament oder eine Wand sein. Das Bodenfundament kann mit Anschlussmitteln versehen sein, über die eine Ladestation an dem Bodenfundament befestigt, insbesondere verschraubt werden kann. An einer Wand kann eine Bohrung vorgesehen sein, mit mehreren Löchern, deren Lochabstand zu dem Lochabstand der Anschlussmimik der Ladestation korrespondiert. Ferner umfasst das System eine Ladestation. Bei dem beanspruchten System wird die Basisplatte mit seiner zweiten Seite auf der Unterlage aufgelegt und mit einem in den Löchern des ersten Lochmusters angeordneten Bolzen an der Unterlage fixiert, insbesondere verschraubt. Ferner wird die Ladestation über die Montagehilfen an der Basisplatte fixiert, insbesondere verschraubt.

Gemäß einem Ausführungsbeispiel wird vorgeschlagen, dass ein aus der Unterlage herausgeführtes elektrisches Kabel durch die Ausnehmung in der Basisplatte geführt ist.

Ein weiterer Aspekt ist ein Verfahren nach Anspruch 12.

Nachfolgend wird der Gegenstand anhand einer Ausführungsbeispiele zeigenden Zeichnung näher erläutert. In der Zeichnung zeigen:
- Fig. 1a, b: an Unterlagen installierte Ladestationen;
- Fig. 2a-c: die Montage einer Ladestation an einem Bestandsfundament mit Anschlussbolzen;
- Fig. 3a-c: die Montage einer Ladestation an einem Bestandsfundament mit Anschlussbohrungen;
- Fig. 4a-c: eine Ausgestaltung gemäß den Fig. 3a-c;
- Fig. 5a, b: ein Anschluss einer Ladestation an ein Bestandsfundament mit Anschlussbolzen in einer Ausgestaltung zu den Fig. 1a-c.

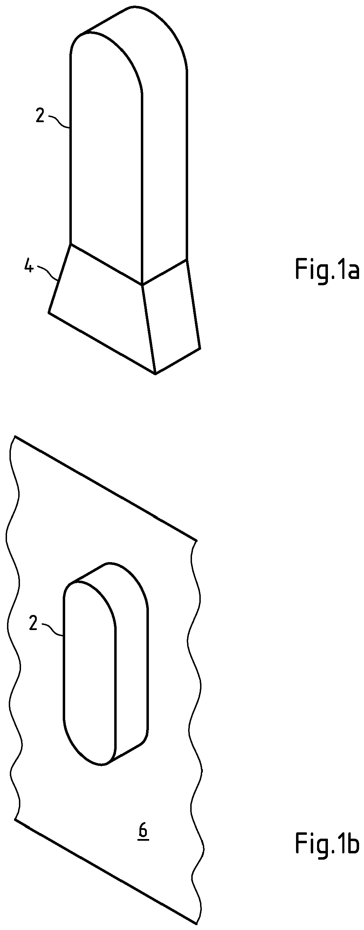

Fig. 1a zeigt eine Ladestation 2 auf einem Bodenfundament 4. Das Bodenfundament 4 ist im Tiefbau in einen Boden eingelassen. Die Oberfläche des Bodenfundaments 4 liegt vorzugsweise auf der Höhe des Bodens oder leicht darunter, also im Bereich der Geländeoberkante. Die Ladestation 2 ist mit dem Bodenfundament 4 verschraubt.

Fig. 1b zeigt eine Ladestation 2, welche an einer Wand 6 befestigt ist. Die Ladestation 2 ist über ein Lochmuster mit der Wand 6 verschraubt. Ladestationen 2, wie sie in den Fig. 1a und b gezeigt sind, müssen bei Zeiten ausgetauscht werden, um technisch weiter entwickelten Ladestationen Platz zu machen. Die Montage neuer Ladestationen erfordert in der Regel andere Anschlussmimiken, welche durch die bestehenden Fundamente 4 oder in den Wänden 6 vorgesehene Lochmuster/Löcher nicht abgebildet sind. Aus diesem Grunde wird eine Basisplatte vorgeschlagen, die als Ladestationsmontageadapter dient.

Wenn nachfolgend die Montage der Ladestationen 2 an einem Fundament 4 beschrieben ist, so gilt das Beschriebene auch für die Montage an einer Wand 6.

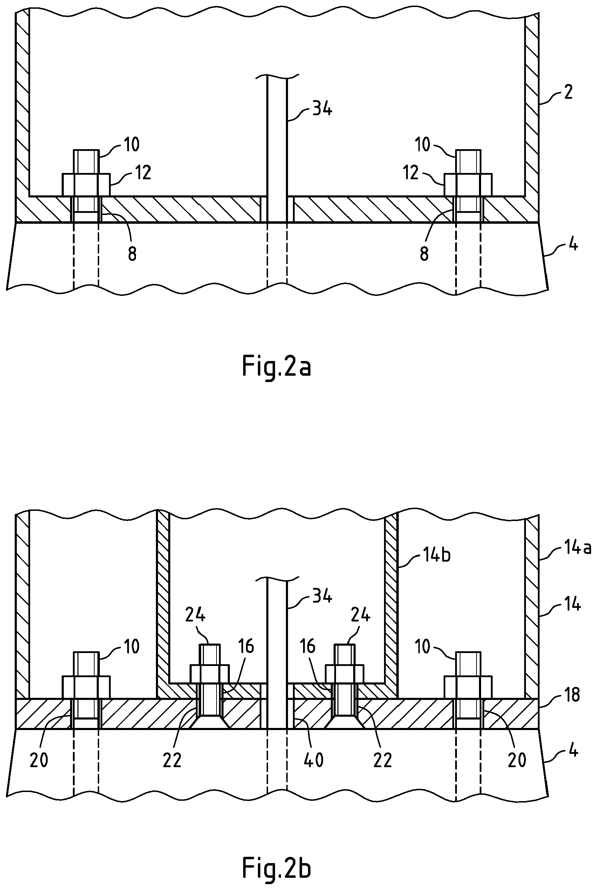

Fig. 2a zeigt einen schematischen Querschnitt durch eine Ladestation 2 die auf einem Fundament 4 montiert ist. Zu erkennen ist, dass die Ladestation 2 in ihrem Boden eine Anschlussmimik 8 in der Form eines Lochmusters aufweist.

Korrespondierend zu der Anschlussmimik 8 sind in dem Bodenfundament 4 Anschlussbolzen 10 vorgesehen. Die Anschlussbolzen 10 können in dem Bodenfundament 4 eingelassen sein. Die Anschlussbolzen 10 weisen senkrecht aus der Oberfläche des Bodenfundaments 4 nach oben und sind durch die Löcher der Anschlussmimik 8 geschoben. Die Ladestation 2 wird mit entsprechenden Muttern 12, welche auf die Anschlussbolzen 10 aufgeschraubt werden, an dem Bodenfundament 4 befestigt.

Wird die Ladestation nun von dem Fundament 4 entfernt, so ragen aus dem Fundament 4 die Anschlussbolzen 10 heraus. Wird eine neue Ladestation 14 installiert, so kann es dazu kommen, dass diese neue Ladestation 14 eine andere Anschlussmimik aufweist als die Anschlussbolzen 10 vorgeben.

Ein Beispiel ist in der Fig. 2b gezeigt. Eine neue Ladestation 14 kann beispielsweise durch ein Gehäuse mit Außenwänden 14a und einer Stützstruktur 14b innerhalb des Gehäuses gebildet sein. Eine Befestigung der Ladestation 14 an einer Unterlage erfolgt über die Stützstruktur 14b, deren Anschlussmimik 16 ein Lochmuster mit einem engen Lochabstand ist, welches verschieden zu dem Lochmuster der Anschlussmimik 8 ist.

Nach der Demontage der Ladestation 2 wird eine Basisplatte 18 auf das Fundament 4 aufgesetzt. Die Basisplatte 18 hat ein erstes Lochmuster 20 sowie ein zweites Lochmuster 22 in der Art von Montagehilfen.

Das erste Lochmuster 20 hat einen Lochabstand, der korrespondiert zu dem Abstand der Anschlussbolzen 10. Dadurch ist es möglich, die Basisplatte 18 mit den Löchern des ersten Lochmusters 20 an den Anschlussbolzen 10 auszurichten und auf diese aufzusetzen. Zuvor werden Schrauben 24 von der dem Fundament 4 zugewandten Seite der Basisplatte 18 durch die Löcher 22 der Montagehilfen durchgesteckt. Zu erkennen ist, dass die Löcher 22 der Montagehilfen auf der dem Fundament 4 zugewandten Seite der Basisplatte 18 Schraubenkopfsenkungen aufweisen, sodass die Schrauben 24 plan mit der zweiten Seite der Basisplatte 18 abschließen. Dadurch ist es möglich, die Basisplatte 18 samt der Schrauben 24 auf das Fundament 4 aufzusetzen, ohne dass ein Abstand dazwischen entsteht.

Dann wird die Basisplatte 18 an den Anschlussbolzen 10 mit entsprechenden Muttern verschraubt. Die Basisplatte 18 ist dadurch fest an dem Fundament 4 befestigt. Anschließend wird die neue Ladestation 14 mit dem Traggerüst 14b an den Schrauben 24 ausgerichtet und die Schrauben 24 werden in die Löcher des Lochmusters 16 eingesteckt. Anschließend erfolgt ein Verschrauben des Traggerüstes 14b mit der Basisplatte 18 über Muttern und die Schrauben 24.

Die Außenwand 14a der Ladestation 14 kann nun aufgesetzt werden und liegt auf der Basisplatte 18 auf oder überlappt diese. Die neue Ladestation 14, welche die Ladestation 2 ersetzt, ist nunmehr fest an dem Bodenfundament 4 befestigt.

Um sicherzustellen, dass das Anschlusskabel 34 von dem Fundament 4 in die Ladestation 14 eingeführt werden kann, ohne das Anschlusskabel 34 neu verlegen zu müssen, weist die Basisplatte 18 eine Öffnung 40 auf. Diese Öffnung 40 liegt innerhalb der von den Löchern 20 und/oder den Löchern 22 aufgespannten Fläche.

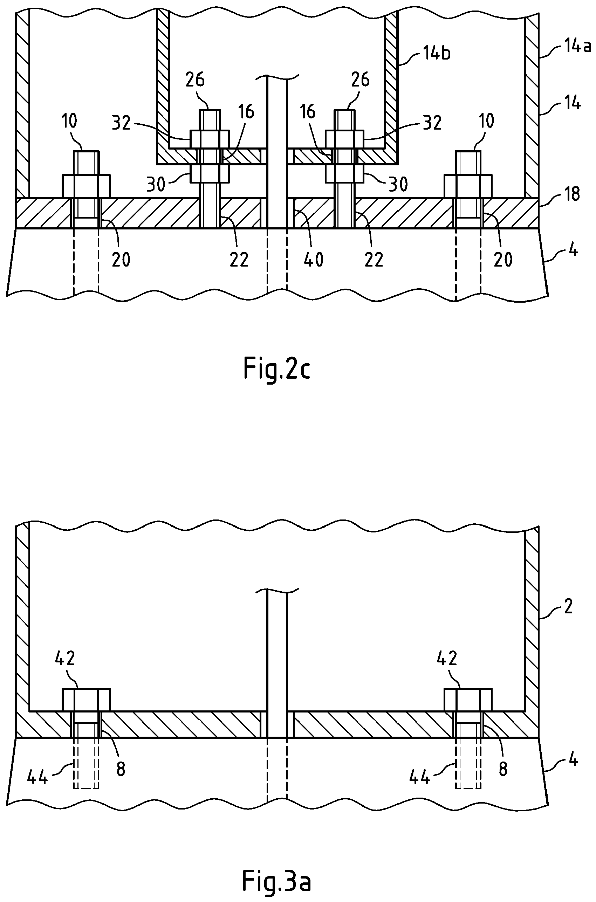

Eine ganz ähnliche Verschraubung der Ladestation 14 ist in der Fig. 2c gezeigt. Im Unterschied zu der Fig. 2b sind nicht Schrauben 24 durch Löcher 22 der Basisplatte 18 eingeschoben, sondern ist die Basisplatte mit Anschlussbolzen 26 versehen, welche aus der ersten Seite der Basisplatte 18 heraus ragen. Die Anschlussbolzen 26 können mit der Basisplatte 18 verschweißt sein. Die Basisplatte 18 wird nach der Demontage der Ladestation 2 auf die Anschlussbolzen 10 aufgesetzt und dort in der oben beschriebenen Art und Weise verschraubt. Anschließend wird das Traggerüst 14b an den Anschlussbolzen 26 ausgerichtet und die Anschlussbolzen 26 werden durch die Löcher 16 durchgeschoben und anschließend hiermit verschraubt.

Als Alternative ist es möglich, dass zunächst Justiermuttern 30 auf die Anschlussbolzen 26 aufgeschraubt werden und anschließend das Traggerüst 14b auf diese Justiermuttern 30 aufgesetzt wird. Das Traggerüst 14b wird zwischen den Justiermuttern 30 und den Befestigungsmuttern 32 klemmend verschraubt. Durch die Justiermuttern 30 ist es möglich, die Ausrichtung des Traggerüsts 14b einzustellen, insbesondere zu nivellieren.

Um sicherzustellen, dass das Anschlusskabel 34 von dem Fundament 4 in die Ladestation 14 eingeführt werden kann, ohne das Anschlusskabel 34 neu verlegen zu müssen, weist die Basisplatte 18 eine Öffnung 40 auf. Diese Öffnung 40 liegt innerhalb der von den Löchern 20 und/oder den Löchern 22 aufgespannten Fläche.

Eine weitere Möglichkeit besteht in der Montage an einem Fundament 4 mit Bohrungen, wie in der Fig. 3a gezeigt. Eine Ladestation 2 ist über Schrauben 42 in Bohrungen 44 des Fundaments 4 verschraubt.

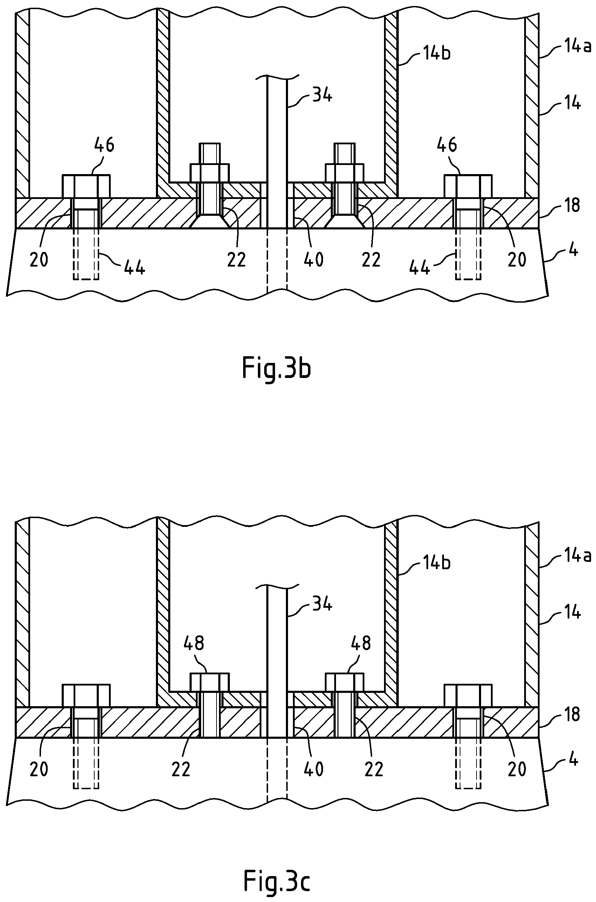

Um nun eine neue Ladestation zu montieren, wird, wie in der Fig. 3b gezeigt, nach der Demontage der Ladestation 2 die Basisplatte 18 mit den Löchern 20 an den Bohrungen 44 ausgerichtet und anschließend werden Schrauben 46 durch die Basisplatte 18 in die Bohrung 44 eingeschraubt. Dadurch ist die Basisplatte 18 an dem Fundament 4 befestigt. Anschließend erfolgt eine Befestigung des Traggerüsts 14b der Ladestation 14, in der gemäß Fig. 2b beschriebenen Weise.

Um sicherzustellen, dass das Anschlusskabel 34 von dem Fundament 4 in die Ladestation 14 eingeführt werden kann, ohne das Anschlusskabel 34 neu verlegen zu müssen, weist die Basisplatte 18 eine Öffnung 40 auf. Diese Öffnung 40 liegt innerhalb der von den Löchern 20 und/oder den Löchern 22 aufgespannten Fläche.

Fig. 3c zeigt die Befestigung der Basisplatte 18 an dem Fundament 4 gemäß der Fig. 3b. Die Basisplatte 18 hat jedoch Als Montagehilfe Bohrungen 22 mit einem Gewinde. Zur Befestigung des Traggerüsts 14b werden Schrauben 48 in diese Bohrungen 22 eingeschraubt.

Um sicherzustellen, dass das Anschlusskabel 34 von dem Fundament 4 in die Ladestation 14 eingeführt werden kann, ohne das Anschlusskabel 34 neu verlegen zu müssen, weist die Basisplatte 18 eine Öffnung 40 auf. Diese Öffnung 40 liegt innerhalb der von den Löchern 20 und/oder den Löchern 22 aufgespannten Fläche.

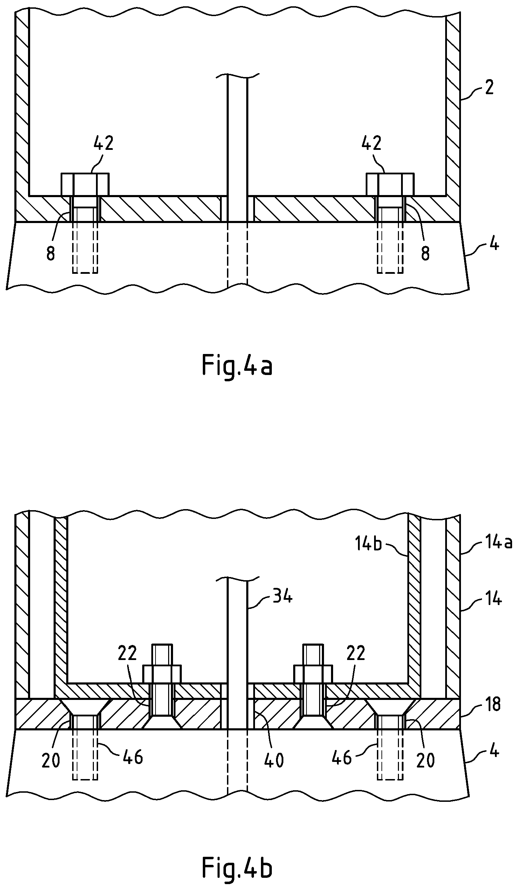

Fig. 4a zeigt wie die Fig. 3a die Befestigung einer Ladestation 2 an einem Fundament 4 über Schrauben 42. Um eine möglichst ebene Montage des Traggerüsts 14b einer neuen Ladestation 14 auf der Basisplatte 18 zu ermöglichen wird, wie in Fig. 4b gezeigt, im Unterschied zu der Fig. 3b die Verschraubung mit den Schrauben 46 derart vorgenommen, dass an den Löchern 8 Schraubkopfsenkungen vorgesehen sind, in denen die Schraubenköpfe der Schrauben 46 versenkt sind. Dadurch kann der Boden des Traggerüsts 14a plan auf der Basisplatte 18 aufgesetzt werden, wie in der Fig. 4b gezeigt.

Um sicherzustellen, dass das Anschlusskabel 34 von dem Fundament 4 in die Ladestation 14 eingeführt werden kann, ohne das Anschlusskabel 34 neu verlegen zu müssen, weist die Basisplatte 18 eine Öffnung 40 auf. Diese Öffnung 40 liegt innerhalb der von den Löchern 20 und/oder den Löchern 22 aufgespannten Fläche.

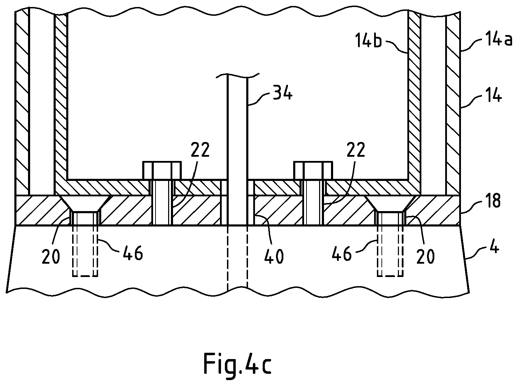

Selbiges gilt für die Fig. 4c, welche entsprechend der Fig. 3c ein Verschrauben des Traggerüsts 14b an der Basisplatte 18 über Schrauben zeigt. Auch hier sind die Schrauben 46 mit ihren Senkköpfen in den Schraubenkopfsenkungen der Basisplatte 18 versenkt.

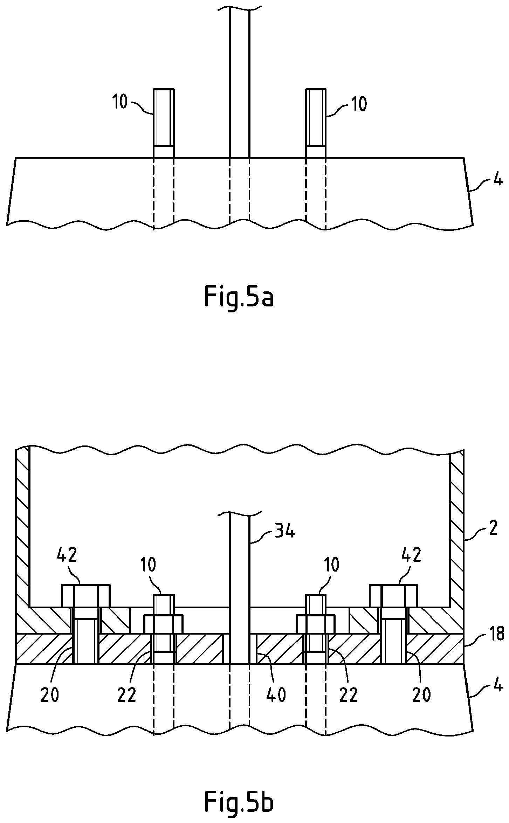

Fig. 5a - b zeigen ein Fundament 4 mit Anschlussbolzen 10, welche beispielsweise einen Lochabstand haben, der zu der Anschlussmimik eines Traggerüsts 14b passt.

Um nun eine "alte" Ladestation 2 ohne ein solches Traggerüst 14b auf dem in Fig. 5a gezeigten Fundament 4 anzuordnen, wird zunächst die Basisplatte 18 auf die Bolzen 10 aufgesetzt. Anschließend wird die Basisplatte 18 über Muttern klemmend an den Bolzen 10 verschraubt.

Eine Ladestation 2 kann dann über Schrauben 42 mit den Löchern 20 in der Basisplatte 18 verschraubt werden. Somit ist es möglich, Fundamente 4 mit Anschlussbolzen 10 vorzusehen, die für Ladestationen mit Traggerüsten 14b ausgerichtet sind. An solche Fundamente 4 können aber zunächst Ladestation 2 angeordnet werden, welche über Verschraubungen mit Schrauben 42 befestigt werden.

Um sicherzustellen, dass das Anschlusskabel 34 von dem Fundament 4 in die Ladestation 14 eingeführt werden kann, ohne das Anschlusskabel 34 neu verlegen zu müssen, weist die Basisplatte 18 eine Öffnung 40 auf. Diese Öffnung 40 liegt innerhalb der von den Löchern 20 und/oder den Löchern 22 aufgespannten Fläche.

Der gegenständliche Ladestationsmontageadapter ermöglicht es somit, unterschiedliche Ladestationen mit unterschiedlichen Anschlussmimiken an einem Fundament mit nur einer Anschlussmimik zu befestigen.

### Bezugszeichenliste

- 2: Ladestation
- 4: Fundament
- 6: Wand
- 8: Anschlussmimik
- 10: Anschlussbolzen
- 12: Mutter
- 14: Ladestation
- 14a: Gehäuse
- 14b: Traggerüst
- 16: Löcher
- 18: Basisplatte
- 20: Löcher
- 22: Löcher
- 24: Anschlussbolzen
- 26: Anschlussbolzen
- 30: Mutter
- 32: Mutter
- 34: Versorgungsleitung
- 40: Durchgang
- 42: Schraube
- 44: Löcher
- 46: Schraube
- 48: Schraube

## Patentansprüche

1. Ladestationsmontageadapter umfassend
- eine Basisplatte (18) mit einem ersten Lochmuster (20) und einer Anordnung von Montagehilfen (22, 26),
**dadurch gekennzeichnet,**
- **dass** die Basisplatte (18) eine von zumindest dem ersten Lochmuster (20) und/oder den Montagehilfen (22, 26) eingefasste Ausnehmung (40) zur Durchführung eines elektrischen Kabels (34) aufweist.

2. Ladestationsmontageadapter nach Anspruch 1,
**dadurch gekennzeichnet,**
- **dass** Löcher des ersten Lochmusters (20) auf einer ersten Seite der Basisplatte (18) jeweils eine Schraubenkopfsenkung aufweisen und die Montagehilfen (22, 26) in Richtung der ersten Seite weisen.

3. Ladestationsmontageadapter nach einem der vorangehenden Ansprüche,
**dadurch gekennzeichnet,**
- **dass** die Montagehilfen (26) aus der ersten Seite der Basisplatte (18) im Wesentlichen senkrecht hervorstehende Anschlussbolzen (26) sind.

4. Ladestationsmontageadapter nach einem der vorangehenden Ansprüche,
**dadurch gekennzeichnet,**
- **dass** die Montagehilfen (22) aus einem zweiten Lochmuster mit zumindest zwei Löchern gebildet sind.

5. Ladestationsmontageadapter nach einem der vorangehenden Ansprüche,
**dadurch gekennzeichnet,**
- **dass** Löcher (22) des zweiten Lochmusters auf einer zweiten Seite der Basisplatte (18) jeweils eine Schraubenkopfsenkung aufweisen.

6. Ladestationsmontageadapter nach einem der vorangehenden Ansprüche,
**dadurch gekennzeichnet,**
- **dass** Löcher (20, 22) des ersten und/oder zweiten Lochmusters Gewinde aufweisen.

7. Ladestationsmontageadapter nach einem der vorangehenden Ansprüche,
**dadurch gekennzeichnet,**
- **dass** Anschlussbolzen von der zweiten Seite durch die Löcher (20) des ersten Lochmusters oder die Löcher (22) des zweiten Lochmusters geschoben sind.

8. Ladestationsmontageadapter nach einem der vorangehenden Ansprüche,
**dadurch gekennzeichnet,**
- **dass** das erste Lochmuster zur Befestigung einer ersten Ladestation (2) angeordnet ist und dass die Montagehilfen (22, 26) zur Befestigung einer zweiten, von der ersten Ladestation (2) verschiedenen Ladestation (14) angeordnet sind.

9. System mit einem Ladestationsmontageadapter nach einem der vorangehenden Ansprüche mit einer Unterlage (4, 6) und einer Ladestation (2, 14), wobei die Basisplatte (18) mit seiner zweiten Seite auf der Unterlage (4, 6) aufgelegt ist und die Basisplatte (18) mit einem in Löchern (20) des ersten Lochmusters angeordneten Bolzen an der Unterlage (4, 6) fixiert ist und dass die Ladestation (14) über die Montagehilfe (22, 26) an der Basisplatte (18) fixiert ist.

10. System nach Anspruch 9,
**dadurch gekennzeichnet,**
- **dass** die Unterlage ein Bodenfundament (4) oder eine Wand (6) ist.

11. System nach Anspruch 9 oder 10,
**dadurch gekennzeichnet,**
- **dass** ein aus der Unterlage (4, 6) herausgeführtes elektrisches Kabel (34) durch die Ausnehmung (40) in der Basisplatte (18) geführt ist

12. Verfahren zur Montage einer Ladestation umfassend,
- Demontieren einer ersten Ladestation von einer Unterlage, wobei die Unterlage Befestigungsmittel zur Befestigung der ersten Ladestation aufweist,
- Montieren eines Ladestationsmontageadapter nach einem der Ansprüche 1 bis 9 auf der Unterlage derart, dass das erste Lochmuster zu den Befestigungsmitteln ausgerichtet wird und die Basisplatte an den Befestigungsmitteln befestigt wird,
- Befestigen einer zweiten von der ersten Ladestation verschiedenen Ladestation an den Montagehilfen.
